Europäisches Patentamt

European Patent Office

Office européen des brevets

(19)

(11) Veröffentlichungsnummer : **0 464 057 B1**

# (12) EUROPÄISCHE PATENTSCHRIFT

(45) Veröffentlichungstag der Patentschrift :
02.06.93 Patentblatt 93/22

(51) Int. Cl.$^5$ : **D21C 5/02**

(21) Anmeldenummer : **90904614.6**

(22) Anmeldetag : **15.03.90**

(86) Internationale Anmeldenummer :
**PCT/EP90/00422**

(87) Internationale Veröffentlichungsnummer :
**WO 90/11402 04.10.90 Gazette 90/23**

(54) **VERFAHREN ZUR ALTPAPIERAUFBEREITUNG.**

(30) Priorität : **23.03.89 DE 3909568**

(43) Veröffentlichungstag der Anmeldung :
**08.01.92 Patentblatt 92/02**

(45) Bekanntmachung des Hinweises auf die
Patenterteilung :
**02.06.93 Patentblatt 93/22**

(84) Benannte Vertragsstaaten :
**AT BE CH DE DK ES FR GB IT LI NL SE**

(56) Entgegenhaltungen :
**Abstract Bulletin of the Paper Chemistry,
Band 49, Nr. 7, Januar 1979, (Appleton, Wisconsin, US), S. 710, Zusammenfassung 6493**

(73) Patentinhaber : **Henkel
Kommanditgesellschaft auf Aktien
Postfach 1100 Henkelstrasse 67
W-4000 Düsseldorf-Holthausen (DE)**

(72) Erfinder : **ENDRES, Helmut
Benrodestrasse 82
W-4000 Düsseldorf 13 (DE)**
Erfinder : **LIPHARD, Maria
Hülseberg Strasse 19
W-4300 Essen 14 (DE)**
Erfinder : **HORNFECK, Klaus
August-Burberg-Strasse 34
W-4020 Mettmann (DE)**
Erfinder : **ARNOLD, Andreas
Hauptstrasse 80
W-4018 Langenfeld (DE)**
Erfinder : **GEISMAR, Günter
Ratherstrasse 30
W-4150 Krefeld (DE)**

EP 0 464 057 B1

## Beschreibung

Die Erfindung betrifft ein Verfahren zur Altpapieraufbereitung.

Unter "Deinken" versteht man die Entfernung von Druckfarben aus Altpapierfaserstoffsuspensionen. Deinking-Verfahren laufen im wesentlichen in zwei Teilschritten ab:

1. Aufschlagen der Altpapiere, d. h. Zerfasern in Wasser bei gleichzeitigem Einwirken der für die Ablösung der Druckfarbenteilchen benötigten Chemikalien und

2. Ausscheidung der abgelösten Druckfarbenteilchen aus der Faserstoffsuspension.

Der zweite Verfahrensschritt kann durch Auswaschen oder Flotation erfolgen (Ullmanns Encyclopädie der technischen Chemie, 4. Auflage, Band 17, Seiten 570 - 571 (1979)). Bei der Flotation, bei der die unterschiedliche Benetzbarkeit von Druckfarben und Papierfasern ausgenutzt wird, wird Luft durch die Faserstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Trennen der Druckfarben bewirken, werden häufig Seifen und/oder Fettalkoholpolyglycolether eingesetzt (Ullmanns Encyclopädie der technischen Chemie, 4. Auflage, Band 17, Seiten 571 - 572 (1979)).

Die klassischen Druckfarbensysteme, beispielsweise auf Basis Nitrocellulose, Maleinatharze und/oder Schellack, die Ester und/oder Ketone, beispielsweise Ethylacetat und/oder Methylethylketon oder Alkohole als Lösungsmittel enthalten, werden in den letzten Jahren aus Umweltschutzgründen in zunehmendem Maße durch wasserverdünnbare Druckfarben ersetzt. Ein weiterer Grund für die zunehmende Verwendung wasserverdünnbarer Druckfarben liegt in der Unbrennbarkeit von Wasser, wodurch in den Druckereien die bei Verwendung lösungsmittelhaltiger Druckfarben notwendige Installation aufwendiger Schutzeinrichtungen überflüssig wird. Die meisten wasserverdünnbaren Druckfarben enthalten als Bindemittel anionische Polymere, beispielsweise carboxylgruppenhaltige Polymere, durch deren Neutralisation mit Basen die Druckfarben wasserverdünnbar werden. Wasserverdünnbare Druckfarben haben jedoch den entscheidenden Nachteil, daß sie mit den üblichen, in der Deinkingflotte enthaltenen Tensiden - wenn überhaupt - nur völlig unzureichend entfernt werden können (Das Papier 42, V 84 - V 88 (1988)). Das hat zur Folge, daß bis heute die in immer größeren Mengen anfallenden Altpapiere, die mit wasserverdünnbaren Druckfarben bedruckt wurden, nicht wiederverwertet werden und somit auch nicht als Altpapierrohstoff für beispielsweise Zeitungsdruck- und Hygienepapiere zur Verfügung stehen.

Durch die zunehmende Einengung der Wasserkreisläufe in der Papierindustrie steigt die Konzentration wasserlöslicher und/oder in Wasser kolloidal gelöster, ionischer und/oder nichtionischer Substanzen anorganischer und/oder organischer Natur erheblich an. Diese Substanzen, die in der Papierindustrie als Störstoffe bezeichnet werden, belasten einerseits das Abwasser und beeinträchtigen andererseits die Papierherstellung, die Papierqualität sowie die Wirksamkeit kationischer Hilfsmittel (Wochenblatt für Papierfabrikation 1984, 37 - 48). Stärke, Casein, Polyvinylalkohol, Polymerdispersionen, Carboxymethylcellulosen und/oder Druckfarbenbindemittel sind Beispiele für Störstoffe.

Die Aufgabe der Erfindung bestand in der Entwicklung eines Verfahrens zur Altpapieraufbereitung, mit dem es möglich ist, Druckfarben und insbesondere wasserverdünnbare Druckfarben, Füllstoffe und/oder Störstoffe aus Papierstoffsuspensionen zu entfernen.

Kationische Schichtverbindungen, die in der Literatur auch als "Doppelschichthydroxide" bezeichnet werden (R. Allmann "Doppelschichtstrukturen mit brucitähnlichen Schichtionen ..." in Chimia 24, 99 - 108 (1970)), können durch die allgemeine Formel

$$M(II)_{1-x}M(III)_x(OH)_2(A^{z-})_{x/z} \cdot n \ H_2O$$

charakterisiert werden, wobei M(II) für mindestens ein zweiwertiges Metallkation, M(III) für mindestens ein dreiwertiges Metallkation und $A^{z-}$ für Anionen ein- und/oder mehrbasischer Säuren steht und die Indices x eine Zahl zwischen 0,01 und 0,5 und n eine Zahl zwischen 0 und 20 bedeuten und z der Anzahl der Ladungen der Anionen entspricht. Diese Schichtverbindungen lassen sich gemäß DE-OS 20 61 156 nach unterschiedlichen Verfahren herstellen, indem beispielsweise eine wäßrige Lösung, die zwei- und dreiwertige Metallkationen in dem in obiger Formel durch x angegebenen Molverhältnis als Salze der gewünschten Säure $H_zA$ enthält, unter Rühren zu einer Lauge, vorzugsweise Natronlauge, unter Einhaltung eines pH-Wertes zwischen 9 und 12 gegeben wird. Die gebildete Schichtverbindung wird abgetrennt, mit Wasser gewaschen und getrocknet. Ein gut charakterisierter Vertreter dieser Substanzklasse ist der als Mineral in der Natur vorkommende oder auch synthetisch herstellbare Hydrotalcit, ein Magnesium-aluminium-hydroxocarbonat der ungefähren Zusammensetzung

$$Mg_6Al_2(OH)_{16}CO_3 \cdot 4 \ H_2O$$

dessen Struktur röntgenographisch bestimmt wurde (R. Allmann und H. P. Jepsen, "Die Struktur des Hydrotalcits" in N. Jahrb. Mineral. Monatsh. 1969, 544 - 551). Mit diesen getrockneten und pulverisierten kationischen Schichtverbindungen können jedoch Druckfarben sowie Füllstoffe und/oder Störstoffe nicht in zufriedenstellender Weise von Papierfasern abgetrennt werden. Schlechte Ergebnisse bei der Abtrennung von Druckfarben, Füllstoffen und/oder Störstoffen von Papierfasern werden ebenfalls bei Verwendung pastöser kationischer Schichtverbindungen obiger Zusammensetzung erzielt, die gemäß DE-A- 38 38 532 herstellbar sind und die einen Wassergehalt von mindestens 30 Gew.-%, bestimmt nach vierstündiger Trocknung bei 110 °C, besitzen.

Überraschenderweise wurde jedoch gefunden, daß mit kationischen Schichtverbindungen obiger Zusammensetzung, die in Papierstoffsuspensionen in situ gefällt werden, Druckfarben, insbesondere wasserverdünnbare Druckfarben sowie Füllstoffe und/oder Störstoffe wirkungsvoll aus Faserstoffsuspensionen entfernt werden können.

Gegenstand der Erfindung ist dementsprechend ein Verfahren zur Altpapieraufbereitung, welches dadurch gekennzeichnet ist, daß wäßrige Papierstoffsuspensionen mit in situ gefällten Schichtverbindungen der allgemeinen Zusammensetzung

$$M(II)_{1-x}M(III)_x(OH)_2(A^{z-})_{x/z} \cdot n\ H_2O$$

in der M(II) für zweiwertige Metallkationen, M(III) für dreiwertiges Metallkationen und $A^{z-}$ für Anionen ein- und/oder mehrbasischer Säuren steht, die Indices x eine Zahl zwischen 0,01 und 0,5 und n eine Zahl zwischen 0 und 20 bedeuten und z der Anzahl der Ladungen der Anionen entspricht, behandelt werden und anschließend die abgelösten Druckfarbenteilchen, Füllstoffe und/oder Störstoffe in an sich bekannter Weise durch Flotation oder Auswaschen aus den Faserstoffsuspensionen entfernt werden.

Weiterer Erfindungsgegenstand ist die Verwendung von in Papierstoffsuspensionen in situ gefällten kationischen Schichtverbindungen obiger Zusammensetzung zur Altpapieraufbereitung.

Die in situ-Fällung kationischer Schichtverbindungen obiger Zusammensetzung erfolgt in der Weise, daß man den Papierstoffsuspensionen nacheinander oder gleichzeitig Salze zweiwertiger Metallkationen und Salze dreiwertigen Metallkationen in fester Form oder vorzugsweise in Form wäßriger Lösungen bei Temperaturen zwischen 20 und 60 °C zusetzt. Als Salze zweiwertiger Metallkationen eignen sich insbesondere Erdalkalinitrate, -chloride, -carbonate, - sulfate, -phosphate und/oder -polyphosphate, wie Magnesiumnitrat, Calciumnitrat, Magnesiumchlorid und/oder Magnesiumsulfat. Als Salze dreiwertiger Metallkationen werden insbesondere Alkalialuminate, Sulfate, Nitrate und/oder Chloride, vorzugsweise Alkalialuminate, beispielsweise Natriumaluminat, eingesetzt. Salze zwei- oder dreiwertiger Metallkationen enthalten besonders bevorzugt Anionen ein-, zwei- und/oder dreibasischer Säuren. Das Molverhältnis zweiwertige Metallkationen zu dreiwertigen Metallkationen liegt vorzugsweise zwischen 20 : 1 und 1 : 1. Bezogen auf lufttrockenen Papierstoff werden dreiwertige Metallkationen vorzugsweise in Mengen zwischen 0,3 und 2 Gew.-% eingesetzt.

Lufttrockener Papierstoff bedeutet, daß sich im Papierstoff ein Gleichgewichtszustand an innerer Feuchte eingestellt hat. Dieser Gleichgewichtszustand hängt von der Temperatur und von der relativen Feuchte der Luft ab.

In vielen Fällen kann die Entfernung von Druckfarben, Füllstoffen und/oder Störstoffen aus Faserstoffsuspensionen gesteigert werden, wenn in situ gefällte kationische Schichtverbindungen zusammen mit $C_{10-22}$-Fettsäuren, beispielsweise Olinor$^R$ 4010, Henkel KGaA, Polymeren, zum Beispiel Polyacrylamiden und/oder Polydimethylaminoethylmethacrylat, und/oder Copolymeren beschrieben, beispielsweise in DE-A- 38 39 479, wie Copolymere aus Dimethylaminoethylmethacrylat, Methacrylsäure und Ethylacrylat, eingesetzt werden.

Die Papierstoffsuspensionen haben vorzugsweise einen alkalischen pH-Wert und insbesondere einen pH-Wert zwischen 8 und 10, der gegebenenfalls durch Zusatz von Laugen, beispielsweise Natron- und/oder Kalilauge, eingestellt wird.

In Gegenwart in situ gefällter kationischer Schichtverbindungen lassen sich die unterschiedlichsten Druckfarben, insbesondere wasserverdünnbare Druckfarben, beispielsweise Zeitungsrotationsfarben, Buchdruckfarben, Offsetdruckfarben, Illustrationstiefdruckfarben, Flexo- und Verpackungstiefdruckfarben aus bedruckten Altpapieren, beispielsweise Zeitungen, Illustrierten, Computerpapieren, Zeitschriften, Broschüren, Formularen, Telefonbüchern und/oder Katalogen entfernen. Die so behandelten Altpapiere zeichnen sich durch sehr hohe Weißgrade aus und besitzen einen deutlich reduzierten Füllstoffgehalt. Des weiteren ist es mit dem erfindungsgemäßen Verfahren beglich, Störstoffe durch Flotation oder Auswaschen aus den Faserstoffsuspensionen zu entfernen. Beeinträchtigungen dieser Bestandteile bei der Papierherstellung, insbesondere bei Verwendung kationischer Papierhilfsmittel, sowie Beeinträchtigungen der Papierqualität werden somit erheblich reduziert.

Bedruckte Altpapiere werden in einem Stofflöser in wäßriger Lösung, die typischerweise 0,5 bis 1,0 Gew.-

% 100%iges Wasserstoffperoxid, 0,5 bis 2,5 Gew.-% 99 Gew.-%ige NaOH und 2,0 bis 6,0 Gew.-% Natronwasserglas, Feststoffgehalt: 35 Gew.-% (37 bis 40 °Be) - alle Gew.-%-Angaben beziehen sich auf lufttrockenes Altpapier - enthält, bei Temperaturen zwischen 20 und 60 °C zerkleinert. Anschließend werden die Faserstoffsuspensionen in Wasser eingerührt oder mit Wasser versetzt, so daß 0,6 bis 1,6 Gew.-%ige Stoffsuspensionen erhalten werden. Nach einer Verweilzeit zwischen 1 bis 2 Stunden bei Temperaturen zwischen 20 und 60 °C werden Salze zweiwertiger Metallkationen sowie Salze dreiwertiger Metallkationen vorzugsweise in Form wäßriger Lösungen gleichzeitig oder nacheinander und anschließend gegebenenfalls 0,1 bis 0,5 g, bezogen auf lufttrockenen Papierstoff, $C_{10-22}$-Fettsäuren, Polymere und/oder Copolymere den Suspensionen zugesetzt. Danach wird vorzugsweise in an sich bekannter Weise, beispielsweise in einer Denver-Flotationszelle, flotiert.

### Beispiele

15 g lufttrockenes (= 13,8 g atro bei 8,3 % Feuchte; atro = absolut trocken) bedrucktes Altpapier (100 % Tageszeitungen), bedruckt mit Flexodruckfarben, wurde in 390 ml wäßriger Lösung, enthaltend 0,22 Gew.-% Natronwasserglas, Feststoffgehalt: 35 Gew.-% (37 bis 40 °Be), 0,09 Gew.-% Wasserstoffperoxid, 30 Gew.-%ig und 0,04 Gew.-% Natriumhydroxid, 99 Gew.-%ig im Starmix, Stufe 2 bei 45 °C zerkleinert. Anschließend wurde der Papierbrei auf 1,38 l mit Wasser verdünnt und 1,5 Stunden bei 45 °C stehengelassen. Danach wurden zu jeweils 175 ml dieser Papierstoffsuspension zuerst 2,43 Gew.-%ige wäßrige Natriumaluminatlösung, danach 7,4 Gew.-%ige wäßrige Magnesiumchloridlösung und anschließend gegebenenfalls $C_{10-22}$-Fettsäuren, Polymere und/oder Copolymere unter Rühren gegeben und 12 Minuten bei 45 °C in einer Denver-Laborflotationszelle (200 ml) bei 3 000 Umdrehungen pro Minute flotiert. Zum Vergleich wurden zu vorgefällter Schichtverbindung, hergestellt aus 3,5 ml 2,43 Gew.-%iger wäßriger Natriumaluminatlösung, die mit 5 ml 7,4 Gew.-%iger wäßriger Magnesiumchloridlösung versetzt wurde, 175 ml der oben genannten Papierstoffsuspension gegeben und 12 Minuten bei 45 °C in einer Denver-Laborflotationszelle (200 ml) bei 3 000 Umdrehungen pro Minute flotiert. Nach der Flotation wurde der jeweilige Papierbrei auf einer Filternutsche vom Wasser getrennt und zwischen 2 Filterpapieren auf einer Phototrockenpresse zu einem Blatt geformt und bei 120 °C 60 Minuten getrocknet.

Die eingesetzten Mengen an zwei- und dreiwertigen Metallkationen sowie gegebenenfalls Zusätzen und die Deinkingergebnisse der mit in situ gefällten kationischen Schichtverbindungen sowie mit vorgefällten oder trockenen kationischen Schichtverbindungen behandelten Altpapiere sind in Tabelle 1 zusammengefaßt. Die Deinkbarkeit D (Weißgrad) des behandelten Altpapiers wurde über eine Reflexionsmessung bei 457 nm auf einem Elrephogerät der Firma Zeiss bestimmt (Remission des unbedruckten, nichtflotierten Papiers = 100 % D, Remission des bedruckten, nichtflotierten Papiers = 0 % D). Die Qualität des Kreislaufwassers wurde mit Hilfe einer Transmissionsmessung (Photometer 662, Fa. Metrohm, Herisau, Schweiz) bestimmt (je höher die Transmission T in % ist, um so besser ist das Kreislaufwasser zu beurteilen: 100 % T bedeutet klares Kreislaufwasser).

EP 0 464 057 B1

## Tabelle 1

| Molverhältnis Al$^{3+}$ : Mg$^{2+}$ | eingesetzte Menge an Al$^{3+}$ in Gew.-%, bezogen auf lufttrockenen Papierstoff | Zusatz, Gew.-% bezogen auf lufttrockenen Papierstoff | pH-Wert der Papierstoffsuspension | % D | % T |
|---|---|---|---|---|---|
| 1 : 5,3 | 1,14 | | 8,2 | 52 | 100 |
| 1 : 5,3 | 1,71 | | 8,1 | 57 | 100 |
| 1 : 5,3 | 1,14 | Copolymer[1], 0,2 Gew.-% | 8,3 | 64 | 100 |
| 1 : 3,5 | 1,14 | | 8,4 | 65 | 100 |
| 1 : 3,5 | 1,14 | Fettsäure[2], 0,4 Gew.-% | 8,4 | 63 | 100 |
| 1 : 1,75 | 1,14 | | 8,8 | 67 | 100 |
| 1 : 1,05 | 1,14 | | 8,9 | 70 | 100 |
| zum Vergleich: | | | | | |
| 1 : 5,3 vorgefällte Schichtverbindung | 1,14 | | 8,4 | 40 | 100 |
| 1 : 2,84 Hydrotalcit[3] | 1,14 | | 9,6 | 40 | 44 |

[1] Copolymer aus 78 Gew.-% Dimethylaminoethylmethacrylat, 7 Gew.-% Methacrylsäure und 15 Gew.-% Ethylacrylat, hergestellt gemäß DE 38 39 479 (Copolymer I)

[2] Olinor$^R$ 4010, Henkel KGaA

[3] Hersteller: Guilini

**Patentansprüche**

1. Verfahren zur Altpapieraufbereitung, dadurch gekennzeichnet, daß wäßrige Papierstoffsuspensionen mit in situ gefällten kationischen Schichtverbindungen der allgemeinen Zusammensetzung

$$M(II)_{1-x}M(III)_x(OH)_2(A^{z-})_{x/z} \cdot n\ H_2O$$

in der M(II) zweiwertige Metallkationen, M(III) dreiwertige Metallkationen, $A^{z-}$ Anionen ein- und/oder mehrbasischer Säuren und die Indices x eine Zahl zwischen 0,01 und 0,5 und n eine Zahl zwischen 0 und 20 bedeuten und z der Anzahl der Ladungen der Anionen entspricht, behandelt werden und anschließend die abgelösten Druckfarben, Füllstoffe und/oder Störstoffe in an sich bekannter Weise durch Flotation oder Auswaschen aus den Faserstoffsuspensionen entfernt werden.

2. Verfahren nach Anspruch 1, dadurch gekennzeichnet, daß M(II) Magnesium- und/oder Calciumkationen, M(III) Aluminium- und/oder Eisenkationen und A Nitrat-, Chlorid-, Carbonat-, Sulfat-, Phosphat- und/oder Polyphosphatanionen bedeuten.

3. Verfahren nach einem oder beiden der Ansprüche 1 bis 2, dadurch gekennzeichnet, daß zur Herstellung in situ gefällter kationischer Schichtverbindungen den Papierstoffsuspensionen eine wäßrige Salzlösung von zweiwertigen Metallkationen und eine wäßrige Salzlösung von dreiwertigen Metallkationen zugesetzt wird.

4. Verfahren nach einen oder mehreren der Ansprüche 1 bis 3, dadurch gekennzeichnet, daß, bezogen auf lufttrockenen Papierstoff, dreiwertige Metallkationen in Mengen zwischen 0,3 und 2 Gew.-% eingesetzt werden.

5. Verfahren nach einem oder mehreren der Ansprüche 1 bis 4, dadurch gekennzeichnet, daß das Molverhältnis zweiwertiger Metallkationen zu dreiwertigen Metallkationen zwischen 20 : 1 und 1 : 1 liegt.

6. Verfahren nach einem oder mehreren der Ansprüche 1 bis 5, dadurch gekennzeichnet, daß der pH-Wert der Papierstoffsuspensionen zwischen 8 und 10 liegt.

7. Verfahren nach einem oder mehreren der Ansprüche 1 bis 6, dadurch gekennzeichnet, daß den Papierstoffsuspensionen $C_{10-22}$-Fettsäuren, Polymere und/oder Copolymere in Mengen zwischen 0,1 und 0,5 Gew.-%, bezogen auf lufttrockenen Papierstoff, zugesetzt werden.

8. Verfahren nach einem oder mehreren der Ansprüche 1 bis 7, dadurch gekennzeichnet, daß Altpapiere, die Altpapierbestandteile aus mit wasserverdünnbaren Druckfarben bedruckten Papieren enthalten, eingesetzt werden.

**Claims**

1. A process for regenerating wastepaper, characterized in that aqueous fibre suspensions are treated with layer compounds precipitated *in situ* which have the following general composition

$$M(II)_{1-x}M(III)_x(OH)_2(A^{z-})_{x/z} \cdot n\ H_2O$$

in which M(II) represents divalent metal cations, M(III) represents trivalent metal cations and $A^{z-}$ represents anions of monobasic and/or polybasic acids, x is a number of 0.01 to 0.5, n is a number of 0 to 20 and z corresponds to the number of charges of the anions, and the detached printing ink particles, fillers and/or trash are subsequently removed from the fibre suspensions in known manner by flotation or washing.

2. A process as claimed in claim 1, characterized in that M(II) represents magnesium and/or calcium cations, M(III) represents aluminium and/or iron cations and A represents nitrate, chloride, carbonate, sulfate, phosphate and/or polyphosphate anions.

3. A process as claimed in one or both of claims 1 and 2, characterized in that, to prepare cationic layer compounds precipitated *in situ*, an aqueous salt solution of divalent metal cations and an aqueous salt solution of trivalent metal cations are added to the fibre suspensions.

4. A process as claimed in one or more of claims 1 to 3, characterized in that trivalent metal cations are used in quantities of 0.3 to 2% by weight, based on air-dry paper stock.

5. A process as claimed in one or more of claims 1 to 4, characterized in that the molar ratio of divalent metal cations to trivalent metal cations is from 20 : 1 to 1 : 1.

6. A process as claimed in one or more of claims 1 to 5, characterized in that the pH value of the fibre suspensions is between 8 and 10.

7. A process as claimed in one or more of claims 1 to 6, characterized in that $C_{10-22}$ fatty acids, polymers and/or copolymers are added to the fibre suspensions in quantities of 0.1 to 0.5% by weight, based on air-dry paper stock.

8. A process as claimed in one or more of claims 1 to 7, characterized in that wastepaper containing wastepaper constituents from paper printed with water-dilutable printing inks is used.


**Revendications**

1. Procédé de récupération de vieux papiers, caractérisé en ce que des suspensions aqueuses de pâte à papier sont traitées avec des composés en couche, cationiques, précipités in situ, ayant la composition générale

$$M(II)_{1-x}M(III)_x(OH)_2(A^{z-})_{x/z} \cdot n \, H_2O$$

dans laquelle M(II) représente des cations métalliques divalents, M(III) des cations métalliques trivalents , $A^{z-}$ des anions d'acides mono et/ou polybasiques et x signifie un nombre compris entre 0,01 et 0,5 et n signifie un nombre compris entre 0 et 20 et z correspond au nombre de charges des anions, et ensuite les couleurs d'impression détachées, les substances de charge et/ou les substances gênantes sont éliminées d'une manière connue en soi par flottation ou par lessivage, des suspensions de substances fibreuses.

2. Procédé selon la revendication 1, caractérisé en ce que M(II) signifie des cations de magnésium et/ou de calcium et M(III) des cations d'aluminium et/ou de fer et A signifie des anions nitrate, chlorure, carbonate, sulfate, phosphate et/ou polyphosphate.

3. Procédé selon l'une ou les deux revendications 1 à 2, caractérisé en ce que pour la préparation de composés en couche, cationiques, précipités in situ, on ajoute aux suspensions de pâte à papier, une solution aqueuse de sel de cations métalliques divalents et une solution aqueuse de cations métalliques trivalents.

4. Procédé selon une ou plusieurs des revendications 1 à 3, caractérisé en ce que - rapporté à la pâte à papier séchée à l'air - des cations métalliques trivalents sont contenus en quantités comprises entre 0,3 et 2 % en poids.

5. Procédé selon une ou plusieurs des revendications 1 à 4, caractérisé en ce que le rapport molaire cations métalliques divalents aux cations métalliques trivalents se situe entre 20 : 1 et 1 : 1.

6. Procédé selon une ou plusieurs des revendications 1 à 5, caractérisé en ce que la valeur du pH des suspensions de pâte à papier se situe entre 8 et 10.

7. Procédé selon une ou plusieurs des revendications 1 à 6, caractérisé en ce que, aux suspensions de pâte à papier, des acides gras en $C_{10-22}$, des polymères et/ou des copolymères sont ajoutés en quantités comprises entre 0,1 et 0,5 % en poids, rapporté à la pâte à papier séché à l'air.

8. Procédé selon une ou plusieurs des revendications 1 à 7, caractérisé en ce que des vieux papiers qui renferment des papiers imprimés avec des couleurs d'impression que l'on peut diluer à l'eau, sont mis en jeu.